**Europäisches Patentamt**

(19) **European Patent Office**

**Office européen des brevets**

(11) Numéro de publication: **0 161 150**
**A1**

(12) **DEMANDE DE BREVET EUROPEEN**

(21) Numéro de dépôt: **85400643.4**

(22) Date de dépôt: **01.04.85**

(51) Int. Cl.⁴: **B 60 B 29/00**

(30) Priorité: **09.04.84 FR 8405705**

(43) Date de publication de la demande:
**13.11.85 Bulletin 85/46**

(84) Etats contractants désignés:
**AT BE CH DE FR GB IT LI LU NL SE**

(71) Demandeur: **S.A.R.L. MECANETUDE**
**134, rue de Lille**
**F-59200 Tourcoing (nord)(FR)**

(72) Inventeur: **Plantefeve, Fernand**
**11 rue des Accacias**
**F-59760 Neuville en Ferrain(FR)**

(74) Mandataire: **Ecrepont, Robert**
**Cabinet Ecrepont 12 Place Simon Vollant (Porte de Paris)**
**F-59800 Lille(FR)**

(54) **Guide centreur de pièce sur un support.**

㊗ L'invention se rapporte à un guide centreur de pièce sur un support, et notamment d'une roue (2) de véhicule automobile sur son moyeu (3) dans le but d'en faciliter le montage ou le démontage.

Le guide comprend deux branches (6, 7) dont l'une des extrémités présente un embout (8, 9) de fixation au moyen de fixation (4) du moyeu (3).

Il est caractérisé par le fait que les dites branches (6, 7) sont constituées par deux leviers (11, 12) rigides et par le fait qu'un lien souple (13) relie entre elles les deux extrémités des leviers (11, 12) opposés aux embouts (8, 9).

Application au montage et au démontage d'une pièce relativement à son support, notamment d'une roue de véhicule.

_FIG:1_

EP 0 161 150 A1

0161150

1

## GUIDE CENTREUR D'UNE PIECE SUR UN SUPPORT

L'invention concerne un guide centreur d'une pièce sur un support, et notamment d'une roue de véhicule automobile sur son moyeu, dans le but d'en faciliter le montage ou le démontage.

L'invention trouve son application dans tous les domaines nécessitant de devoir porter, guider et centrer une pièce par rapport à un support, en tenant compte de la position des moyens de fixation de la pièce au support. -

Par exemple, le montage d'une roue de véhicule automobile sur son moyeu nécessite d'une part, l'élévation de la roue jusqu'à la hauteur du moyeu, d'autre part la mise en coïncidence des orifices de fixation de la roue avec les goujons de fixation du moyeu ou les orifices taraudés du moyeu lorsque la fixation se fait au moyen de vis.

Cette opération est plus difficile lorsque la roue est lourde et, à cet effet, on peut souligner que certaines roues de poids lourds peuvent atteindre un poids de quatre vingts à cent kilos.

Il existe des dispositifs de guidage constitués par une fourche rigide à deux branches qui passent respectivement par un orifice de fixation de la roue, et viennent se monter sur les goujons de fixation du moyeu.

On peut citer par exemple, les dispositifs décrits dans les brevets FR-681.492, 686.360 et 1.407.855.

0161150

Pour de tels dispositifs, cependant, l'écartement des branches de la fourche n'est pas réglable de manière aisée.

En outre, ces dispositifs conviennent pour des véhicules légers mais ne sont pas adaptés pour porter et guider une roue de poids élevé telle que la roue d'un camion.

En effet, dans un tel cas, l'utilisateur ne peut pas saisir le guide avec de bonnes prises et produire son effort dans de bonnes conditions.

Il existe également des dispositifs constitués par un cable souple dont chaque extrémité est pourvue d'un embout de fixation, et qui, en position, constitue une boucle dont chaque branche traverse un orifice de fixation de la roue.

On connaît, par exemple, un tel dispositif d'après le brevet FR-662.633, et un dispositif du même type d'après le brevet US.2.770.773.

Comme les guides précédents, de tels dispositifs ne sont adaptés que pour guider et centrer des roues légères, ne nécessitant de la part de l'utilisateur qu'un effort minime.

On connaît également d'après les brevets GB.544.510 et 766.928 et d'après le brevet FR-2.354.207 un guide constitué par une branche unique, souple, semi-souple ou rigide.

De tels guides, cependant, ne permettent pas de guider une roue vers son moyeu en mettant directement en coïncidence les trous de fixation de la roue avec les moyens de fixation du moyeu et ils ne sont pas adaptés non plus à des roues de poids élevé.

Un des buts de la présente invention est de remédier à l'ensemble de ces inconvénients et, à cet effet, l'invention propose un guide centreur de pièce sur son support notamment d'une roue de véhicule automobile sur son moyeu qui permet à la fois de soulever la roue, et de mettre directement en coïncidence ses orifices de fixation avec les moyens de fixation du moyeu.

Un autre but de la présente invention est de proposer un guide centreur de roue qui permet à l'utilisateur d'effectuer son effort pour soulever la roue, dans des conditions de confort et de sécurité optimales même dans le cas où la roue présente un poids élevé.

Un autre but de la présente invention est de proposer un guide 0161150 centreur de roue constitué de différents éléments indissociables, et qui peuvent être rangés sous un volume réduit, lui permettant en particulier d'être transporté à bord de véhicules comme des voitures ou des camions sous un volume réduit.

D'autres buts et avantages de la présente invention apparaîtront au cours de la description qui va suivre.

Le guide centreur de pièce sur un support, selon l'invention, comprend deux branches respectivement munies à l'une de leurs extrémités d'un embout de fixation à un moyen de fixation du support, chaque embout étant relié à une branche par des moyens autorisant la rotation de l'embout par rapport à la branche autour de son axe de révolution ainsi qu'un désaxement de la branche par rapport à son embout.

Le guide est caractérisé en ce que les dites branches sont constituées par deux leviers rigides présentant respectivement un embout de fixation à l'une de leurs extrémités et par le fait qu'un lien souple relie entre elles les deux extrémités des leviers opposés aux embouts.

L'invention sera mieux comprise à l'aide de la description qui va suivre, faite à titre d'exemple non limitatif, en regard du dessin ci-annexé qui représente schématiquement :

- figure 1 : une vue générale de dessus du guide de l'invention, dans l'application au montage d'une roue automobile sur son moyeu,

- figure 2 : une vue partiellement en coupe illustrant un mode de mise en oeuvre de l'invention,

- figure 3 : une vue partiellement en coupe illustrant une variante de mise en oeuvre de l'invention,

- figure 4 : une vue partiellement en coupe illustrant une autre variante de mise en oeuvre de l'invention.

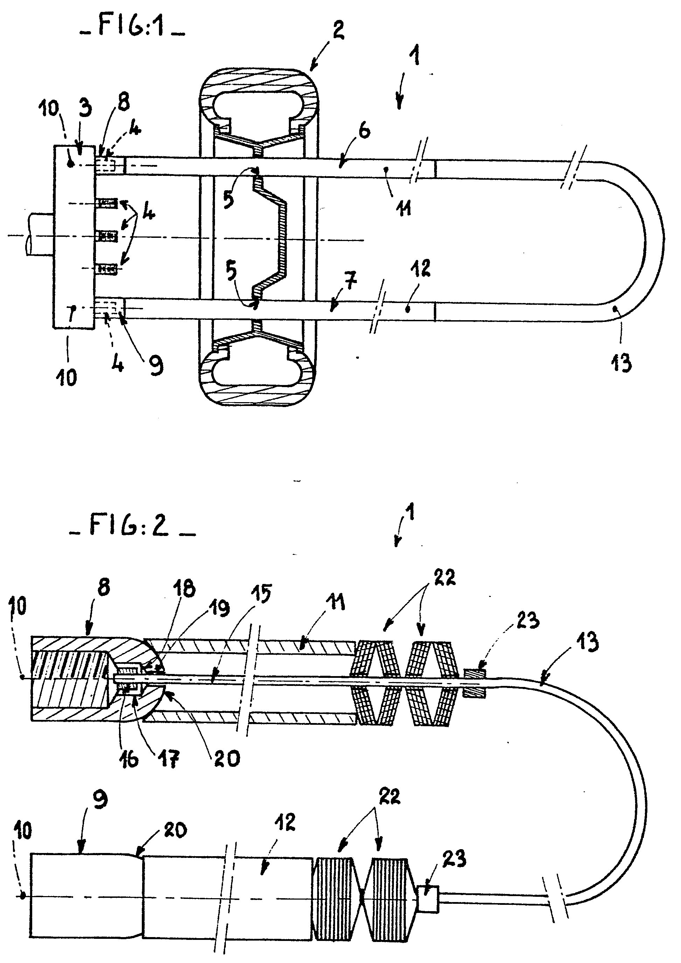

A titre d'illustration de l'invention, la figure 1 représente le guide 1 en position pour guider une roue 2 vers son moyeu de support 3.

La roue 2 est de tout type, par exemple une roue de véhicule léger, de camion, d'autobus, de tracteur ...

Le moyeu 3 présente des moyens de fixation 4 de la roue 2 qui, selon les cas, consistent en des goujons, des trous taraudés pour des vis, ou des orifices pour des boulons.

Dans l'exemple illustré, les moyens de fixation 4 sont des goujons, qui sont en coïncidence avec des orifices de fixation 5 de la roue.

Le guide 1 présente tout d'abord deux branches 6, 7 de section inférieure aux dimensions des orifices 5, respectivement munies à l'une de leurs extrémités d'un embout 8 et 9 qui, comme illustré à la figure 1, est destiné à être fixé sur l'un des moyens de fixation 4 du moyeu 3.

A cet effet, chaque embout 8 et 9 présente un moyen de fixation complémentaire à celui du moyeu 3, c'est à dire le plus souvent un orifice taraudé pour un goujon du moyeu 3 ou un doigt fileté pour un orifice taraudé du moyeu 3 .

Les embouts 8 et 9 présentent de préférence une surface extérieure de révolution d'axe 10, qui, lorsque les embouts sont en position sur les moyens de fixation du moyeu 3, est confondu avec l'axe des moyens de fixation du moyeu 3.

En outre, le diamètre extérieur maximum des embouts 8 et 9 est au plus égal au diamètre des orifices de fixation 5 de la roue 2.

Chaque embout 8, 9 est relié à l'une des branches 6, 7 par des moyens qui autorisent sa rotation relative par rapport à la branche, autour de son axe de rotation 10 de façon à faciliter son montage ou démontage sur un moyen de fixation 4.

Les moyens de liaison autorisent également un désaxement de la branche 6, 7 par rapport à l'axe de révolution 10 de l'embout 8, 9 de façon à pouvoir lever ou baisser les branches 6, 7 pour faire glisser la roue 2.

Selon l'invention, les branches 6, 7 sont constituées par deux leviers rigides 11, 12 sensiblement identiques dont les extrémités opposées aux embouts 8,9 sont reliées par un lien souple 13.

La longueur des leviers 11, 12 dépend principalement du poids de la roue 2 à guider.

A titre d'exemple non limitatif, cette longueur peut être de l'ordre de un mètre environ pour des roues de poids lourd, d'autobus, de tracteur et. elle peut être de l'ordre de deux cents millimètres environ pour des véhicules légers et des camionnettes.

Il en est de même pour la longueur du lien souple 13, qui, dans le cas de roues de poids important est de l'ordre de un mètre environ et, dans le cas de roues plus légères, de l'ordre de trois cent cinquante millimètres environ.

Naturellement, l'ensemble de ces chiffres n'est donné qu'à titre indicatif et n'a aucune valeur limitative pour l'invention.

L'utilisation du guide est la suivante :

Le moyeu 3 est supposé être à une hauteur suffisante pour permettre le montage de la roue 2, qui est amenée à proximité de lui, dans une position approximativement verticale.

Chaque embout 8, 9 est passé au travers d'un orifice de fixation 5, puis est fixé sur un moyen de fixation 4 du moyeu de façon que les deux moyens de fixation 4 utilisés soient en coïncidence avec les deux orifices de fixation traversés par les branches 6, 7 du guide.

La fixation des embouts 8, 9 aux moyens de fixation 4 du moyeu 3 se fait aisément grâce en particulier aux moyens de liaison des embouts 8, 9 aux branches 6, 7 qui autorisent la rotation des embouts 8, 9 autour de leur axe de révolution.

Il est préférable pour équilibrer l'effort de l'utilisateur que les moyens de fixation 4 sur lesquels sont fixés les embouts 8, 9 soient situés sensiblement sur une horizontale.

Après cette opération, dans le cas d'un guide pour une roue de poids élevé, l'utilisateur saisit l'extrémité des deux leviers 11, 12 à la manière des brancards d'une brouette, en passant le lien souple 13 sur ses épaules et derrière son cou.

Dans cette position, l'utilisateur fournit son effort dans des conditions de sécurité et de confort optimales, car le poids de la roue transmis par les leviers est réparti non seulement dans les bras mais également au niveau des épaules de l'utilisateur.

Dans le cas d'un guide pour une roue de poids peu élevé, il suffit que l'utilisateur saisisse le lien souple 13 au niveau de la boucle qu'il constitue dans sa zone centrale et soulève l'ensemble.

Le mouvement de levée des leviers 11, 12 et du lien souple 13 provoque le soulèvement de la roue et sa descente par gravité le long des leviers 11, 12 vers le moyeu 3 et les moyens de fixation 4.

L'utilisation des deux embouts provoque la mise en coïncidence directe et immédiate des orifices de fixation 5 de la roue avec les moyens de fixation 4.

Après cette opération, on fixe provisoirement la roue au moyeu par les moyens de fixation 4 restés libres, puis on démonte les embouts et on fixe enfin la roue de manière définitive.

La figure 2 illustre un mode de réalisation du guide 1.

Cette figure représente un guide qui comprend deux leviers 11, 12 reliés par un lien souple 13.

Les leviers 11, 12 sont des éléments tubulaires qui sont reliés à l'une de leurs extrémités aux deux embouts 8, 9.

Le lien souple 13 est prolongé de chaque côté par deux brins 15 qui traversent l'intérieur des tubes de part en part, et dont les extrémités sont liées aux embouts 8, 9 par exemple au moyen d'un sertissage 16.

Le sertissage se situe à l'intérieur d'un logement 17 de l'embout, qui présente en outre vers le levier tubulaire un épaulement 18 pour retenir le sertissage 16 et un orifice 19 pour le passage du lien souple.

De préférence, un jeu relativement important existe entre le sertissage 16 et son logement 17, de façon à faciliter la rotation de l'embout autour de son axe 10.

Avantageusement, dans le cas où l'embout présente un orifice taraudé de fixation à un goujon 4 du moyeu 3, le logement 17 est le prolongement du trou percé en vue du taraudage.

Son extrémité orientée vers le levier est sensiblement tronconique, autour de l'orifice 19 de passage du lien souple, et avantageusement, le sertissage 16 présente en regard une surface également tronconique ou bombée de façon à permettre à ce niveau un léger désaxement de l'extrémité du brin 15 par rapport à l'axe de révolution 10 de l'embout 8.

De préférence, l'extrémité 20 des embouts 8, 9 qui est orientée vers les leviers tubulaires 11, 12, est bombée, ou semi-sphérique.

0161150

L'extrémité des leviers tubulaires 11, 12 orientée vers un embout est quant à elle usinée de façon correspondant à la forme bombée de l'embout ; par exemple elle est chanfreinée.

Cette disposition permet de désaxer les leviers tubulaires 11, 12 par rapport à l'axe 10 des embouts 8, 9 notamment pour lever la roue en vue de la faire glisser vers son moyeu 3 le long des leviers 11, 12 en assurant une bonne continuité de la surface de glissement entre chaque levier 11, 12 et son embout 8, 9.

Egalement dans ce but, dans un mode préférentiel de réalisation, des moyens élastiquement compressibles repoussent chaque levier 11, 12 contre son embout correspondant 8, 9.

Ces moyens consistent par exemple en des rondelles ressorts 22, qui sont traversées par le lien souple 13, et qui sont situées entre chaque extrémité d'un levier 11, 12 opposé à son embout 8, 9 et un moyen d'arrêt, par exemple un sertissage 23 réalisé sur le lien souple 13.

Les rondelles ressorts peuvent être disposées selon un ou plusieurs étages et pour chaque étage, elles peuvent être disposées selon une épaisseur ou plus.

Les sertissages 23 sont disposés sur le lien souple 13 de façon à ce que les rondelles ressorts repoussent les leviers tubulaires 11, 12 contre les embouts respectifs 8, 9 et autorisent un désaxement des leviers tubulaires 11, 12 par rapport aux axes 10 des embouts 8, 9 en absorbant les contraintes que ces déplacements entraînent en particulier sur les brins 15.

Dans le but d'éviter une usure prématurée du lien souple 13, de préférence, l'extrémité de l'orifice 19 des embouts 8, 9 qui débouche vers l'intérieur des leviers tubulaires 11, 12 est évasée et les sertissages 23 situés en arrière des rondelles ressorts 22 orientent le lien souple dans une direction oblique, vers le haut, lorsque le lien souple 13 est en position.

Les leviers tubulaires 11, 12 sont en tout matériau approprié notamment métallique, par exemple en acier ou en un alliage d'aluminium.

Le lien souple 13 est un cordage, ou bien de préférence un cable métallique éventuellement gainé, et dans la zone centrale de la boucle qu'il constitue, lorsque le guide est en position, il est pourvu éventuellement d'un rembourrage.

Dans le cas où le lien souple 13 est un cable souple, les sertissages 16 et 23 sont des manchons traditionnels.

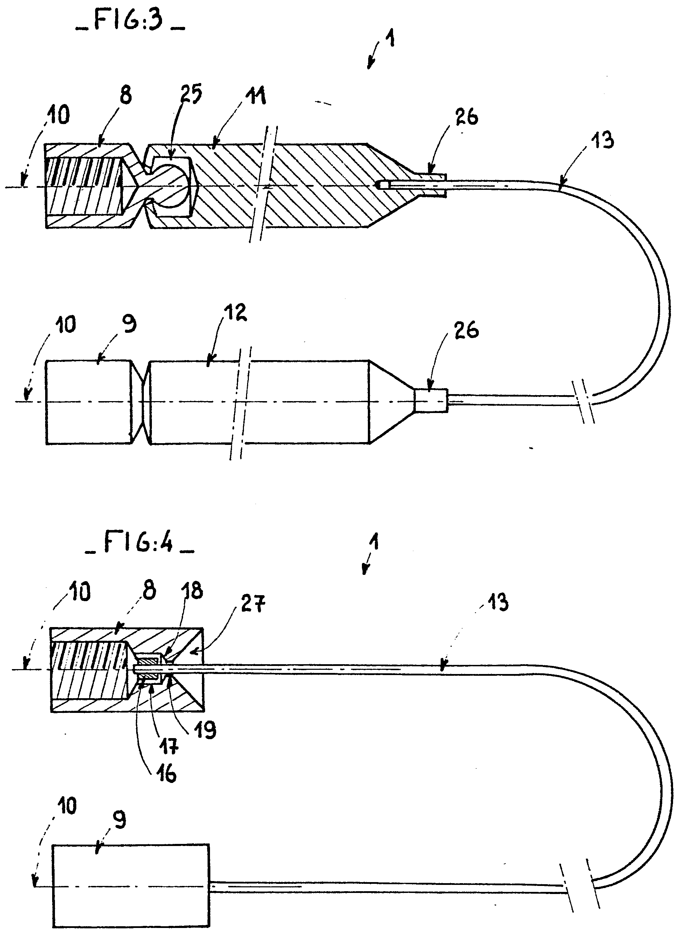

La figure 3 illustre une variante de l'invention selon laquelle les embouts 8, 9 sont reliés aux leviers 11, 12 par des articulations 25 du type rotoïde, qui autorisent pour chaque embout une rotation par rapport à son axe de révolution 10, et un désaxement de chaque levier par rapport à son embout.

Le lien souple 13 relie les extrémités des leviers 11, 12 opposés aux embouts 8, 9 , et, par exemple, chaque extrémité du lien souple 13 est sertie au niveau d'un rétreint 26 que présentent les extrémités des leviers.

De même que dans le cas précédent, les leviers 11, 12 sont en tout matériau approprié, notamment métallique et ils peuvent être pleins ou tubulaires.

Le cable 13 est également en tout matériau approprié. Par exemple, il s'agira d'un cordage ou de préférence d'un cable métallique éventuellement gainé, et rembourré.

La figure 4 illustre une autre variante de l'invention, selon laquelle le guide présente un cable souple dont chaque extrémité est directement liée aux embouts 8, 9.

La liaison entre les extrémités du lien souple 13 est sensiblement du même type que celle décrite relativement à la figure 2.

De préférence, cependant, chaque embout 8, 9 présente une surface extérieure cylindrique de révolution, et une ouverture évasée 27 orientée vers le lien souple 13.

C'est sur la paroi de cette ouverture 27 que le cable vient s'appliquer lorsqu'il est levé pour guider la roue 2 vers son moyeu 3.

Cette disposition assure une bonne continuité entre le lien souple et l'embout pour le guidage de la roue.

En outre, cela évite tout épaulement, ou zone montante, au niveau de la liaison entre le lien souple et les embouts, contre lesquels immanquablement la roue viendrait buter lors de sa mise en place.

Le guide selon l'invention permet donc de centrer une pièce sur son support et notamment une roue sur son moyeu dans des conditions de sécurité et de confort optimales pour un utilisateur.

En outre, il peut être stocké et rangé sous un volume réduit et donc trouver facilement place à bord des véhicules que ce soit des voitures légères, des poids lourds, des autobus, etc ...

Enfin, ses différents éléments forment un seul ensemble indissociable et son utilisation ne nécessite aucune adaptation au niveau de la roue ni du moyeu.

En outre, d'une manière évidente, si le guide permet de faciliter le montage d'une roue sur son moyeu et plus généralement d'une pièce sur son support, il permet également d'en faciliter le démontage.

Naturellement, la présente description n'est donnée qu'à titre indicatif et l'on pourrait adopter d'autres mises en oeuvre de l'invention sans pour autant sortir du cadre de celle-ci.

REVENDICATIONS

1. Guide centreur d'une pièce sur un support, notamment mais non exclusivement d'une roue (2) de véhicule sur son moyeu (3) dans le but d'en faciliter le montage ou le démontage, comprenant deux branches (6, 7) munies respectivement à l'une de leurs extrémités d'un embout (8, 9) de fixation à un moyen de fixation (4) du moyeu (3), des moyens de liaison des embouts (8, 9) aux branches (6, 7) autorisant par ailleurs la rotation de chaque embout (8, 9) relativement à la branche (6, 7) correspondante, autour de son axe de révolution (10) des embouts (8, 9) et en outre un désaxement de chaque branche (6, 7) par rapport à l'axe (10) de son embout (8, 9) correspondant, CARACTERISE par le fait oue les dites branches (6, 7) sont constituées par deux leviers (11, 12) rigides, présentant respectivement un embout de fixation (8, 9) à l'une de leurs extrémités, et par le fait qu'un lien souple (13) relie entre elles les deux extrémités des leviers (11, 12) opposées aux embouts (8, 9).

2. Guide selon la revendication 1 caractérisé par le fait que les leviers (11, 12) sont tubulaires, que le lien souple (13) est prolongé de chaque côté par un brin (15) qui traverse l'intérieur des leviers tubulaires (11, 12) de part en part, et oue les extrémités des brins (15) assurent la liaison respectivement entre chaque levier (11, 12) et son embout correspondant.

3. Guide selon la revendication 2 caractérisé par le fait que chaque embout (8, 9) présente une surface (20) bombée orientée vers l'extrémité du levier tubulaire (11, 12) correspondant.

4. Guide selon la revendication 2 ou 3 caractérisé par le fait que des moyens (22) élastiquement compressibles repoussent chaque levier (11, 12) contre son embout de fixation (8, 9).

5. Guide selon la revendication 4 caractérisé par le fait que les dits moyens comprennent pour chaque levier (11, 12) des rondelles ressorts (22) traversées par le lien souple (13) et disposées entre l'extrémité du levier (11, 12) opposée à l'embout (8, 9) et des moyens d'arrêt (23) solidaires du lien (13).

6. Guide selon la revendication 1 caractérisé par le fait que le lien souple (13) relie entre elles les deux extrémités des leviers (11, 12) opposées aux embouts (8, 9) et qu'il est

**0161150**

solidarisé par chacune de ses extrémités aux leviers (11, 12) au niveau d'un rétreint (26) que présente chaque extrémité de leviers (11, 12) opposée à un embout.

7. Guide selon l'une quelconque des revendications 1 à 6 caractérisé par le fait qu'il comprend deux leviers (11, 12) présentant respectivement une longueur d'environ un mètre, dont les extrémités opposées aux embouts (8, 9) sont reliées par un cable métallique d'une longueur d'un mètre environ.

8. Guide selon l'une quelconque des revendications 1 à 6 caractérisé par le fait qu'il comprend deux leviers (11, 12) présentant respectivement une longueur de deux cents millimètres environ, dont les extrémités opposées aux embouts (8, 9) sont reliées par un cable métallique .(13) d'une longueur de trois cent cinquante millimètres environ.

_FIG:1_

_FIG:2_

_FIG:3_

_FIG:4_

Office européen
des brevets

**RAPPORT DE RECHERCHE EUROPEENNE**

**0161150**
Numéro de la demande

EP  85 40 0643

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 702 461 (WANNER) <br> * Page 2, colonne de gauche, lignes 28-38; figure 1 * | 1,8 | B 60 B  29/00 |
| D,Y | FR-A- 662 633 (FONTAINE) <br> * Page 1, lignes 8-16; figure 1 * | 1,8 | |
| A | US-A-1 595 930 (SIEVEN) <br> * Page 1, lignes 76-104; figures 1-3 * | 1,2 | |
| A | BE-A- 433 208 (MATHIEU) <br> * Page 1, ligne 20 - page 2, ligne 2; figure 1 * | 1 | |

DOMAINES TECHNIQUES
RECHERCHES (Int. Cl.4)

B 60 B  29

*Le présent rapport de recherche a été établi pour toutes les revendications*

| Lieu de la recherche | Date d'achèvement de la recherche | Examinateur |
|---|---|---|
| LA HAYE | 12-07-1985 | AYITER I. |